Europäisches Patentamt

European Patent Office

Office européen des brevets

(19)

(11) Numéro de publication : **0 331 533 B1**

(12)

# FASCICULE DE BREVET EUROPEEN

(45) Date de publication du fascicule du brevet :
**29.07.92 Bulletin 92/31**

(51) Int. Cl.⁵ : **F16K 1/16,** F16K 27/02,
F24F 13/15, B29C 67/22

(21) Numéro de dépôt : **89400121.3**

(22) Date de dépôt : **16.01.89**

(54) **Volet de registre de dosage notamment pour installation de climatisation.**

(30) Priorité : **26.02.88 FR 8802418**
**26.02.88 FR 8802419**

(43) Date de publication de la demande :
**06.09.89 Bulletin 89/36**

(45) Mention de la délivrance du brevet :
**29.07.92 Bulletin 92/31**

(84) Etats contractants désignés :
**AT BE CH DE ES FR GB GR IT LI LU NL SE**

(56) Documents cités :
**EP-A- 0 060 111**
**DE-A- 1 629 308**
**FR-A- 1 202 769**
**FR-A- 1 405 985**

(56) Documents cités :
**FR-A- 2 304 037**
**US-A- 2 718 885**
**US-A- 3 084 715**
**US-A- 3 547 152**
**US-A- 4 469 132**

(73) Titulaire : **LA TOLERIE INDUSTRIELLE**
**Z.I. N.1 B.P. 134**
**F-61300 L'Aigle (FR)**

(72) Inventeur : **Heyndrickx, François**
**Le Jarrier**
**F-61270 Bonnefoi (FR)**

(74) Mandataire : **Armengaud Ainé, Alain**
**Cabinet ARMENGAUD AINE 3 Avenue**
**Bugeaud**
**F-75116 Paris (FR)**

## Description

La présente invention est relative aux registres équipant les réseaux de circulation d'air des installations de climatisation pour régler le flux d'air, et elle concerne plus particulièrement des volets de tels registres.

On sait que les volets des registres de dosage de flux d'air des installations de climatisation actuelles sont métalliques, généralement en acier galvanisé ou en aluminium et ils sont montés dans un cadre positionné dans la gaine de circulation d'air, par l'intermédiaire d'axes de rotation munis à leurs extrémités de moyens de commande du registre.

Cette technique classique donne généralement satisfaction aux utilisateurs, cependant elle s'avère relativement coûteuse en raison du processus complexe de fabrication des volets métalliques qui exigent des opérations de découpe des tôles, pliage, assemblage, nécessitant de nombreuses heures de travail en atelier.

On connaît, par ailleurs (FR A-1 202 769) des éléments de construction tels que portes ou similaires, constitués de deux panneaux extérieurs formant des faces latérales de l'élément entre lesquels on intercale un matériau synthétique de remplissage, pouvant posséder des propriétés adhésives et servant à assembler les panneaux extérieurs par collage.

EP-A-0060111 fait connaître un procédé de fabrication d'un volet de registre de dosage du flux d'air pour une installation de climatisation selon lequel on assemble l'une contre l'autre deux plaques de faible épaisseur, les plaques étant munies de parties formant éléments d'obturation et comportant des embouts de manière à délimiter entre elles un espace clos, les axes d'articulation du volet faisant partie intégrante desdits embouts.

En partant de cet état de la technique, l'invention se propose d'apporter un procédé de fabrication d'un volet de registre pour réseaux de circulation d'air, remarquable par sa simplification et permettant une fabrication totalement automatisée de volets complets prêts à être montés dans les registres pour réseaux de circulation d'air. L'invention vise également le volet obtenu par la mise en oeuvre dudit procédé.

Un progrès technique important apporté par l'invention réside notamment en ce qu'elle permet de réaliser des volets présentant la plus grande légèreté possible, compatible toutefois avec les exigences des résistances mécaniques, l'invention permettant, contrairement aux solutions selon la technique antérieure de réaliser une pièce très légère de faible épaisseur, intégrant ses axes de rotation.

En conséquence, l'invention concerne en premier lieu un procédé de fabrication d'un volet de registre de dosage du flux d'air pour une installation de climatisation, selon lequel on assemble l'une contre l'autre deux plaques de faible épaisseur, ces plaques étant munies de parties ou embouts formant éléments d'obturation dont font partie intégrante les axes d'articulation du registre, de manière à délimiter entre elles un espace clos, caractérisé en ce que l'on dépose une matière synthétique dans ledit volume clos ainsi délimité avant la fermeture de celui-ci où elle s'expand et, après polymérisation et rigidification totale, elle assure d'une part la liaison entre les plaques et d'autre part la résistance mécanique dudit volet.

L'invention concerne en outre un volet, notamment pour registre de dosage du flux d'air pour installation de climatisation comportant deux plaques de faible épaisseur assemblées de manière à délimiter entre elles un volume creux, des parties ou embouts formant éléments d'obturation pour ledit volume et des axes d'articulation faisant partie intégrante des éléments d'obturation, dans lequel lesdites-plaques sont profilées et assemblées tête bêche l'une contre l'autre afin de délimiter ledit volume creux qui est obturé sur deux côtés opposés par des petites branches du profil caractérisé en ce que lesdites plaques sont profilées en forme de L, ladite pièce moulée ou semi-moulée est de forme parallépipédique et ledit volume creux est rempli d'une matière synthétique qui assure la liaison entre les plaques et la résistance mécanique du volet.

Selon une caractéristique de cette invention, la partie profilée qui vient s'encastrer entre les deux plaques du volet est munie d'une rainure dans laquelle peut être logé le talon d'un joint d'étanchéité.

Selon un exemple de réalisation de l'invention, la partie profilée formant élément d'obturation est constituée d'un profilé en U s'encastrant dans les deux plaques du volet et servant de logement au talon d'un joint d'étanchéité, ce profilé en U étant muni de part et d'autre de portions d'axe qui lui sont perpendiculaires, l'une de ces portions d'axe venant s'engager entre les deux plaques du volet et l'autre faisant saillie vers l'extérieur afin de constituer l'axe recevant le mouvement de rotation.

Selon un autre exemple de réalisation de l'invention, la partie de l'embout-axe qui vient s'encastrer entre les deux plaques du volet est constituée d'une plaque plane munie de nervures, de préférence sur ses deux faces, la face frontale extérieure de ladite plaque nervurée étant munie d'une portion d'axe qui comporte des moyens dans lesquels vient en prise l'organe de transmission du mouvement de rotation.

Selon une caractéristique de cette invention, la matière synthétique assurant d'une part la liaison des deux plaques constituant le volet et d'autre part, la rigidité mécanique de ce dernier est une mousse, de préférence de polyuréthane ou de polyamide, qui est expansée in situ, dans tout le volume creux délimité entre les plaques.

Selon une autre caractéristique de cette invention, les plaques minces sont munies de nervures le long de leurs arêtes, ces nervures, après l'assemblage des plaques, délimitant un logement pour le talon d'un joint qui assure soit l'étanchéité entre les volets du registre soit l'étanchéité entre les volets et le cadre du bâti dans lequel ils sont montés.

Selon l'invention, les plaques minces peuvent être métalliques ou réalisées en matière plastique.

D'autres caractéristiques et avantages de cette invention ressortiront de la description faite ci-après en référence aux dessins annexés qui en illustrent divers exemples de réalisation dépourvus de tout caractère limitatif. Sur les dessins :

La figure 1 est une vue en perspective d'un premier exemple de réalisation d'un volet pour registre selon l'invention ;

Les figures 2 et 3 sont des vues partielles également en perspective de deux exemples de réalisation de volets selon l'invention ;

Les figures 4, 5 et 6 sont respectivement des vues en élévation, en bout et en plan d'un volet selon l'invention, muni de son axe de rotation ;

Les figures 7 et 8 sont respectivement des vues en élévation et en bout montrant le montage de deux volets selon l'invention pour réaliser un registre et

La figure 9 est une vue en perspective d'un premier exemple de réalisation d'un embout formant axe pour un volet de registre conforme à l'invention ;

La figure 10 est une vue partielle en plan représentant un registre constitué de volets rotatifs munis d'embouts-axes conformes à la figure 9 ;

La figure 11 est une vue moitié en coupe axiale longitudinale (partie droite) et moitié en plan (partie gauche), d'un second exemple de réalisation d'un embout-axe pour volet de registre selon l'invention et

Les figures 12 et 13 sont des vues respectivement en bout et en élévation de la figure 11.

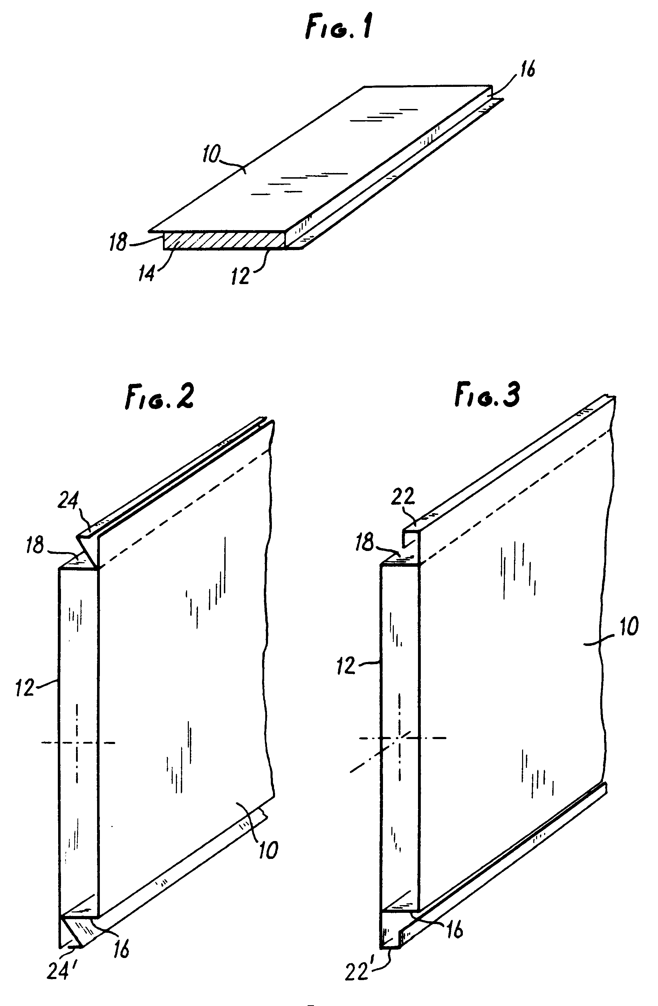

En se référant aux figures 1 à 3 des dessins, on voit que, dans ce premier exemple de réalisation, un volet selon l'invention est constitué par l'assemblage de deux plaques minces identiques 10, 12, réalisé de façon à délimiter entre elles un volume creux parallélépipédique qui est rempli de matière synthétique 14, qui, d'une part, assure la liaison entre les deux plaques et d'autre part leur confère une excellente résistance mécanique (forte résistance à la flexion et à la torsion). Par ailleurs, en choisissant une matière synthétique de type M1 on obtient également une bonne résistance au feu. De préférence, on utilise une mousse notamment de polyuréthane ou de polyamide qui peut être expansée in situ, comme on le décrira ci-après.

Les plaques de faible épaisseur 10, 12, sont réalisées de préférence en tôles ou en matière plastique et elles sont profilées en L, de manière que la petite branche du profil en L 16, 18, de chaque plaque 10, 12, forme une cloison longitudinale pour le volume parallélépipédique délimité entre les deux plaques qui sont assemblées tête bêche. Le volume parallélépipédique délimité entre les plaques 10, 12, est donc obturé par les cloisons 16, 18, sur les côtés parallèles à l'axe longitudinal des plaques 10, 12 et sur les deux autres côtés on prévoit des éléments d'obturation parallélépipédiques. La matière synthétique telle que mousse de polyuréthane ou polyamide est placée dans le volume clos ainsi délimité avant la fermeture de celui-ci où elle s'expand et après polymérisation et rigidification totale, elle assure la liaison entre les plaques 10, 12 et leur confère leur résistance mécanique. On peut également injecter la matière synthétique dans le volume clos décrit ci-dessus, cette matière du type mousse synthétique de préférence, s'expansant alors in situ dans ce volume clos.

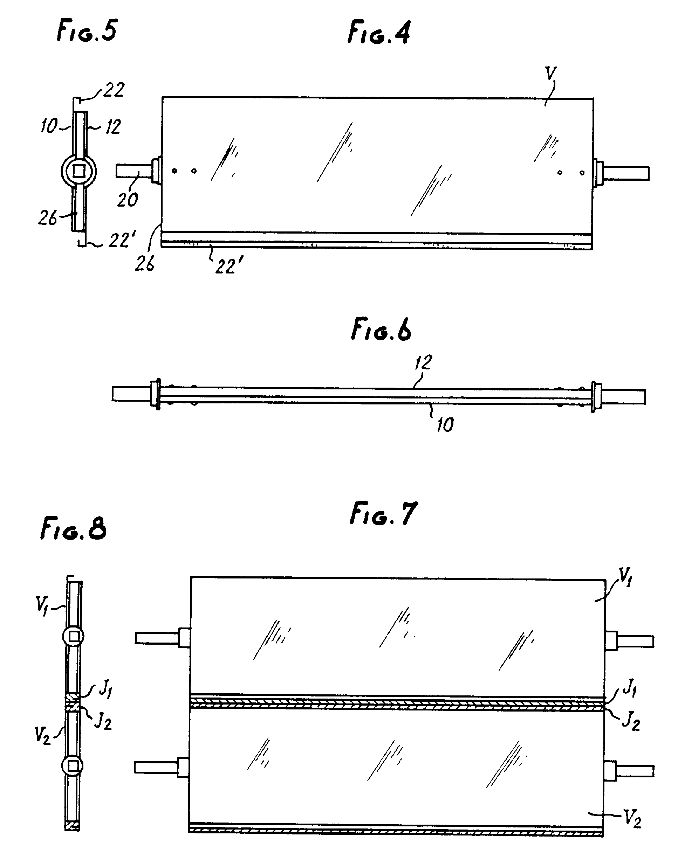

On obtient ainsi un volet V pour registre (Figures 4-6) sur lequel sont montés ensuite les axes d'articulation 20, 20' permettant le montage dans la gaine où est positionné le registre, les extrémités des axes recevant les moyens habituels de commande de la rotation des volets. Selon l'invention, les axes d'articulation 20, 20' peuvent faire partie intégrante des éléments tels que 26 (figures 4-5) assurant l'obturation des petits côtés des plaques, comme on le décrira ci-après en référence aux figures 11 à 15. Selon une caractéristique de cette invention, les arêtes longitudinales des plaques 10, 12 sont de préférence nervurées de manière à former sur le volet assemblé un logement pouvant recevoir le talon d'un joint longitudinal qui assure l'étanchéité entre les volets successifs d'un registre et le cadre dans lequel est monté le registre.

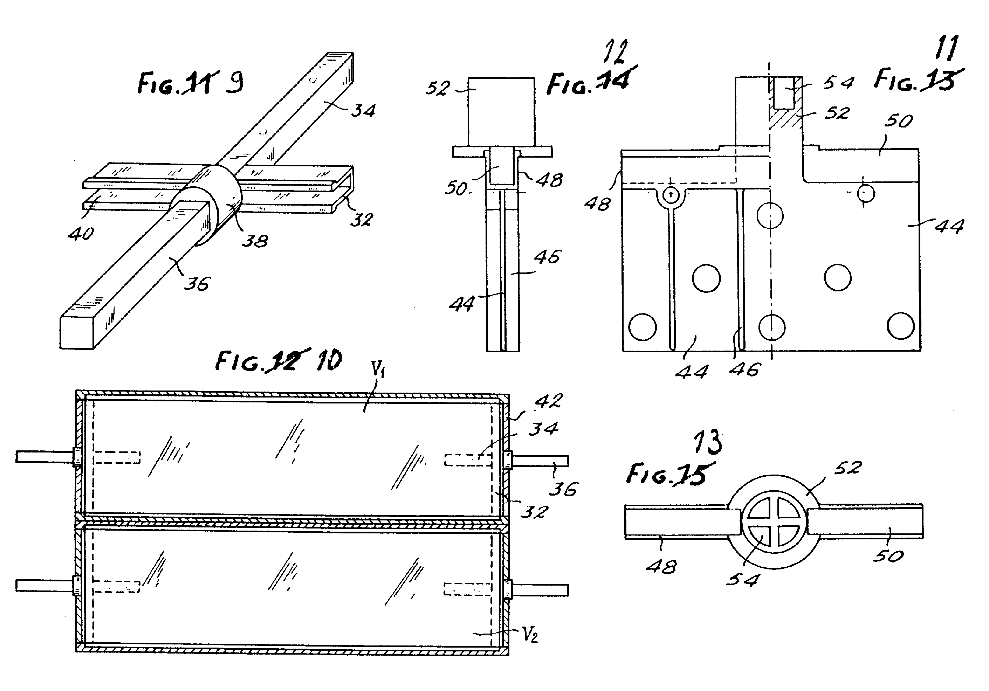

Sur les figures 2 et 3, on peut voir deux exemples de réalisation non limitatifs de logements 22, 22', 24, 24' destinés à recevoir les talons des joints d'étanchéité et sur les figures 7 et 8, on a représenté le montage dans un registre de volets V1 et V2 selon l'invention. Sur ces figures, on peut voir des joints J1 et J2 montés respectivement, de la manière décrite ci-dessus dans les logements ménagés le long des côtés longitudinaux des volets.

On a précisé ci-dessus que chacun des éléments d'obturation tels que 26 (figures 4, 5) pouvait comporter les axes d'articulation du volet. Dans ce mode de réalisation préféré de l'invention, chaque élément d'obturation présente la forme d'un embout formant axe ou embout-axe.

On se réfère en premier lieu à la figure 9 sur laquelle on a représenté à titre d'exemple non limitatif un premier mode de réalisation de cet embout-axe.

On voit que, dans cet exemple de réalisation, l'embout-axe se présente sous la forme d'une pièce moulée monobloc, comprenant essentiellement une partie profilée en U 32 de laquelle font saillie perpendiculairement deux portions d'axe 34 et 36, la portion d'axe 36 (axe dit extérieur) comportant une embase cylindrique 38 de manière que la pièce rotative pourvue de l'embout-axe représentée par la figure 9 puisse tourillonner dans un support par l'intermédiaire de cette embase cylindrique 38. La partie profilée 32 est conçue de façon à venir s'encastrer entre les deux plaques du volet muni de l'embout comme on le verra ci-après, en référence à la figure 2, la portion d'axe 34 (axe dit intérieur) venant alors s'engager entre les deux plaques de volet. La portion d'axe 36 qui fait saillie vers l'extérieur constitue ainsi l'un des axes de rotation du volet. Par ailleurs, cette portion d'axe 36 sert également d'organe de transmission du mouvement de rotation. Pour cette raison, la portion d'axe 36 présente une section droite de forme appropriée (cette section droite est carrée dans l'exemple de réalisation illustré par la figure 9, permettant de mettre en prise l'axe 36 avec un moyen de commande de rotation (non représenté).

Dans le mode de réalisation illustré par la figure 9, la partie profilée 32 permettant la forme d'un U, délimite une rainure 40 destinée à recevoir le talon d'un joint d'étanchéité comme on le décrira ci-après en référence à la figure 10.

Sur cette figure 10, on a représenté partiellement un registre de réglage du flux d'air, notamment d'une installation de climatisation, avec ses volets, tels que V1 et V2 conformes au mode de réalisation décrit ci-dessus en référence aux figures 1 à 7. Cette figure 10 montre la façon selon laquelle on effectue la mise en place de l'embout-axe conforme à la figure 9 qui forme également élément d'obturation pour le volume qui est compris entre les deux parois ou plaques des volets tels que V1 et V2. On voit que la partie profilée en U 32 et la portion d'axe intérieur 34 sont encastrées entre les deux plaques du volet correspondant et que la portion d'axe extérieur 36 fait saillie de manière à pouvoir recevoir le moyen d'entraînement en rotation du volet. Sur cette figure on a représenté en outre les joints tels que 42 dont les talons viennent se positionner dans les rainures 40 des profilés 32 de la manière décrite ci-dessus en référence à la figure 9.

On se réfère maintenant aux figures 11 à 13 qui illustrent un second exemple de réalisation non limitatif de l'embout-axe pour volet de registre selon la présente invention.

Dans cette variante, l'embout-axe se présente sous la forme d'une plaque plane 44 munie de nervures de rigidification 46 prévues sur chacune de ses deux faces, et d'une partie profilée en U 48 sur sa face frontale, cette partie profilée 48 étant de conception similaire à la partie profilée 32 de l'embout-axe décrit ci-dessus en regard de la figure 9. Elle délimite donc une rainure 50 qui sert de logement au talon d'un joint d'étanchéité similaire au joint 42 représenté sur la figure 10. La partie profilée 48 comporte en outre une portion d'axe 52 perpendiculaire au profil 48 et qui sert d'axe de rotation au volet, cet axe 52 jouant donc le rôle de l'axe 36 des volets V1 et V2 dans le registre illustré par la figure 10. Par ailleurs, la portion d'axe 52 comporte un alésage qui est séparé en plusieurs logements 54 de manière à pouvoir recevoir la broche ou similaire d'un moyen de transmission du mouvement de rotation (non représenté sur le dessin), au volet du registre.

Comme on le comprend, la mise en place de l'embout-axe représenté sur les figures 11 à 13 s'effectue en encastrant la plaque 44 et ses nervures 46 dans le volume délimité entre les deux plaques 10, 12 ou 10', 12' du volet de registre tel que V1 ou V2 (figure 6), de manière à obturer ce volume, la portion d'axe 36 faisant alors saillie vers l'extérieur de façon similaire à la portion d'axe 20 de l'embout illustré par la figure 4, l'ensemble étant maintenu par vissage et la prise de mouvement de rotation s'effectuant par l'intermédiaire de l'alésage 54.

De la lecture de la description qui précède, on comprend que l'invention permet d'apporter une simplification importante à la fabrication des volets de registre, cette fabrication pouvant être facilement automatisée aux stades découpe, pliage, assemblage, mise en place des embouts-axes et remplissage de matière synthétique telle que mousse.

Par ailleurs, l'invention permet de réaliser des volets légers à forte résistance mécanique et au feu.

Les volets de registre selon l'invention peuvent être utilisés pour toutes les applications de l'aéraulique telles que notamment : conditionnement d'air, filtration, ventilation, industrie de l'air froid, et dans les applications thermiques industrielles, en vue notamment de réaliser des registres pour conduits d'évacuation de gaz, par exemple des produits de combustion.

**Revendications**

1. Procédé de fabrication d'un volet de registre de dosage du flux d'air pour une installation de climatisation, selon lequel on assemble l'une contre l'autre deux plaques de faible épaisseur (10, 12 ; 10', 12'), ces plaques étant munies de parties (32) ou embouts formant éléments d'obturation dont font partie intégrante les axes d'articulation (20, 20') du registre de manière à délimiter entre elles un espace clos, caractérisé en ce que l'on dépose une matière synthétique (14) dans ledit volume clos ainsi délimité avant la fermeture de celui-ci où elle s'expand et, après polymérisation et rigidification totale, elle assure d'une part la liaison entre les plaques (10, 12 ; 10', 12') et d'autre part la résistance mécanique dudit volet.

2. Volet, notamment pour registre de dosage du flux d'air pour installation de climatisation comportant deux plaques de faible épaisseur (10, 12) assemblées de manière à délimiter entre elles un volume creux, des parties ou embouts formant éléments d'obturation pour ledit volume et des axes d'articulation faisant partie intégrante des éléments d'obturation, dans lequel lesdites plaques (10, 12) sont profilées et assemblées tête bêche l'une contre l'autre afin de délimiter ledit volume creux qui est obturé sur deux côtés opposés par des petites branches (16, 18) du profil, chacune des parties formant éléments d'obturation étant constituée par une pièce moulée (32) ou semi-moulée qui vient s'encastrer entre les deux plaques du volet, et dont fait partie intégrante une portion en saillie (36) constituant à la fois l'axe de rotation du volet et l'organe de transmission du mouvement de rotation à ce dernier caractérisé en ce que lesdites plaques (10, 12) sont profilées en forme de L, ladite pièce moulée ou semi-moulée (32) est forme parallépipédique et ledit volume creux est rempli d'une matière synthétique (14) qui assure la liaison entre les plaques et la résistance mécanique du volet.

3. Volet selon la revendication 2, caractérisé en ce que ladite matière synthétique est une mousse de préférence de polyuréthane ou de polyamide éventuellement expansée in situ.

4. Volet selon l'une des revendications 2 ou 3, caractérisé en ce que lesdites plaques sont munies de nervures (22, 22', 24, 24') le long de leurs arêtes, ces nervures après l'assemblage des plaques, délimitant un logement pour le talon d'un joint (J1, J2) qui assure soit l'étanchéité entre les volets successifs (V1, V2) d'un registre, soit l'étanchéité entre les volets et le cadre du bâti dans lequel ils sont montés.

5. Volet selon l'une des revendications précédentes, caractérisé en ce que lesdites plaques de faible épaisseur sont métalliques.

6. Volet selon la revendication 2, caractérisé en ce que la partie profilée (32) qui vient s'encastrer entre les deux plaques du volet est munie d'une rainure (40) dans laquelle peut venir se loger le talon d'un joint d'étanchéité (42).

7. Volet selon la revendication 2, caractérisé en ce que la partie profilée (32) formant élément d'obturation est constituée d'un profilé en U s'encastrant entre les deux plaques du volet et servant de logement au talon d'un joint d'étanchéité, ce profil en U étant muni de part et d'autre de portions d'axe (34-36), l'une (34) venant s'engager entre les deux plaques du volet et l'autre (36) faisant saillie vers l'extérieur afin de constituer l'axe du volet recevant le mouvement de rotation.

8. Volet selon la revendication 2, caractérisé en ce que la partie de l'embout-axe qui vient s'encastrer entre les deux plaques du volet, est constituée d'une plaque plane (44) munie de nervures (46) de préférence sur ses deux faces, la face frontale extérieure de ladite plaque étant munie d'une portion d'axe (52) qui comporte des moyens (54) dans lesquels vient en prise l'organe de transmission du mouvement de rotation.

**Patentansprüche**

1. Verfahren zur Herstellung einer-Dosierklappe für den Luftstrom bei einer Klimaanlage, worin man zwei Platten geringer Dicke (10,12;10',12') aneinander befestigt, wobei diese Platten mit Teilen (32) oder Ansätzen ausgestattet sind, die Dichtungselemente bilden, die als integralen Bestandteil die Schwenkachsen (20,20') der Dosierklappe derart aufweisen, daß zwischen ihnen ein geschlossener Raum umgrenzt wird, dadurch gekennzeichnet, daß man in dieses so umgrenzte geschlossene Volumen vor dessen Verschluß ein synthetisches Material (14) bringt, in dem es sich ausdehnt und nach Polymerisation und völligem Aushärten einerseits die Verbindung zwischen den Platten (10,12;10',12') und andererseits die mechanische Widerstandsfähigkeit der Dosierklappe gewährleistet.

2. Klappe, insbesondere als Dosierklappe des Luftstroms bei einer Klimaanlage, mit zwei Platten geringer Dicke (10,12), die so zusammengebaut sind, daß sie zwischen sich einen Hohlraum begrenzen, mit Teilen oder Ansätzen, die Dichtungselemente für diesen Hohlraum bilden und mit Schwenkachsen, die integraler Bestandteil der Dichtungselemente sind, wobei diese Platten (10,12) profiliert sind und "Kopf bei Fuß" aneinander montiert sind, so daß der Hohlraum, der auf zwei gegenüberliegenden Seiten durch kleine Abschnitte (16,18) des Profils abgedichtet ist, begrenzt ist, wobei jedes der Dichtungselemente bildenden Teile aus einem geformten Stück (32) oder halbgeformten Stück gebildet ist, das zwischen die zwei Platten der Dosierklappe eingespannt wird und wobei als integraler Bestandteil davon ein hervorstehender Abschnitt (36) ausgebildet ist, der gleichzeitig die Rotationsachse der Dosierklappe und das Übertragungsorgan für die Rotationsbewegung auf letztere darstellt, dadurch gekennzeichnet, daß die Klappen (10,12) in L-Form profiliert sind, wobei das geformte oder halbgeformte Stück (32) parallelepipedisch ausgebildet ist und der Hohlraum mit einem synthetischen Material (14) ausgefüllt ist, das die Verbindung zwischen den Platten und die mechanische Widerstandsfähigkeit der Dosierklappe gewährleistet.

3. Dosierklappe nach Anspruch 2, dadurch gekennzeichnet, daß das synthetische Material ein Schaum vorzugsweise aus ggf. in situ expandiertem Polyurethan oder Polyamid ist.

4. Dosierklappe nach Anspruch 2 oder 3, dadurch gekennzeichnet, daß die Platten mit Rippen (22,22',24,24') entlan, ihrer Kanten versehen sind, wobei diese Rippen nach dem Zusammenbau der Platten eine Aufnahme für die Zunge einer Dichtung (J1,J2) begrenzen, die entweder die Dichtigkeit zwischen den aufeinanderfolgenden Dosierklappen (V1,V2) eines Dosierschiebers oder die Dichtigkeit zwischen den Dosierklappen und der Einfassung des Rahmens, in dem sie montiert sind, gewährleisten.

5. Dosierklappe nach einem der vorhergehenden Ansprüche, dadurch gekennzeichnet, daß die Platten geringer Dicke aus Metall bestehen.

6. Dosierklappe nach Anspruch 2, dadurch gekennzeichnet, daß das profilierte Teil (32), das zwischen die zwei Platten der Dosierklappe eingefügt wird, mit einer Rille (40) versehen ist, in der die Zunge einer Dichtung (42) zu liegen kommen kann.

7. Dosierklappe nach Anspruch 2, dadurch gekennzeichnet, daß das ein Dichtungselement bildende profilierte Teil (32) aus einem U-Profil geformt ist, das zwischen die zwei Platten der Dosierklappe eingefügt ist und als Aufnahme für die Zunge einer Dichtlippe dient, wobei dieses U-Profil beidseitig mit Achsabschnitten (34-36) versehen ist, wobei der eine (34) zwischen die zwei Platten der Dosierklappe eingreift und der andere (36) nach außen hervorspringt, um die Achse der Dosierklappe zu bilden, die die Rotationsbewegung aufnimmt.

8. Dosierklappe nach Anspruch 2, dadurch gekennzeichnet, daß der Teil der Ansatz-Achse, der zwischen die zwei Platten der Dosierklappe eingefügt ist, aus einer ebenen Platte (44) gebildet ist, die vorzugsweise auf ihren beiden Seitenflächen mit Rippen (46) versehen ist, wobei die äußere Vorderseite der Platte mit einem Achsabschnitt (52) versehen ist, der Mittel (54) aufweist, in die das Übertragungssorgan für die Rotationsbewegung in Eingriff kommt.

**Claims**

1. Method of making a flap for a proportioning shutter for the air flow for an air-conditioning installation, according to which two plates of small thickness (10, 12; 10', 12') are assembled facing each other, these plates being provided with parts (32) or caps forming closure elements, of which the hinge pins or shafts (20, 20') of the shutter form an integral part, in such a manner as to form between these plates a closed space, characterized in that a synthetic material (14) is placed in said thus defined closed space before it is closed, where this synthetic material expands and, after polymerization and complete hardening, it assures, on the one hand, the bond between the plates (10, 12; 10', 12') and, on the other hand, the mechanical strength of said flap.

2. Flap, notably for proportioning shutter for the air flow for an air-conditioning installation, comprising two plates of small thickness (10, 12) assembled together in such a manner as to define between them a hollow space, parts or caps forming closure elements for said space and hinge pins or shafts forming an integral part of the closure elements, in which said plates (10, 12) are profiled and assembled head-to-tail opposite each other in order to define said hollow space, which is closed on two opposite sides by the small arms (16, 18) of the profile, each of the parts forming the closure elements being composed of a moulded or semi-moulded piece (32) which becomes fixed between the two plates of the flap, and of which a projecting portion (36) forms an integral part, this projecting portion constituting both the axis of rotation of the flap and the transmission element for the rotational movement to this flap, characterized in that said plates (10, 12) are profiled to an L-shaped section, said moulded or semi-moulded piece (32) is of parallelepipedic shape and said hollow space is filled with a synthetic material (14) which assures the bond between the plates and the mechanical strength of the flap.

3. Flap according to Claim 2, characterized in that said synthetic material is a foam, preferably of polyurethane or polyamide, possibly expanded in situ.

4. Flap according to one of Claims 2 or 3, characterized in that said plates are provided with ribs (22, 22', 24, 24') along their arrises, said ribs, after the plates have been assembled together, defining a seating for the heel of a seal (J1, J2) which assures leak-tightness between the successive flaps (V1, V2) of a shutter, or the leak-tightness between the flaps and the frame of the housing in which they are mounted.

5. Flap according to one of the preceding Claims, characterized in that said plates of small thickness are of metal.

6. Flap according to Claim 2, characterized in that the profiled piece (32) which is fitted between the two plates of the flap is provided with a groove (40), in which the heel of a seal (42) may be seated.

7. Flap according to Claim 2, characterized in that the profiled piece (32) forming the closure element is composed of a U-section profile fitted between the two plates of the flap and serving as a seating for the heel of a seal, this U-section profile being provided on either side with shaft portions (34-36), of which one (34) engages between the two plates of the flap and the other (36) projects outwards in order to form the shaft of the flap receiving the rotational movement.

8. Flap according to Claim 2, characterized in that the part of the cap-shaft which is embedded between the two plates of the flap is composed of a plane plate (44) provided with ribs (46), preferably on both its faces, the outer front face of said plate being provided with a shaft portion (52) which comprises means (54), into which the transmission element for the rotary movement engages.

# Fig.1

# Fig.2

# Fig.3

Fig.5  Fig.4

Fig.6

Fig.8  Fig.7

FIG. 11 9

34

40

38

32

36

FIG. 12 10

$V_1$

42

34

36

32

$V_2$

52 FIG. 14 12

50

48

44

46

44

54 FIG. 13 11

52

50

48

44

48

44

46

13

FIG. 15

52

48

54

50

EP 0 331 533 B1